# FASCICULE DE BREVET EUROPEEN

(11) **EP 3 619 443 B1**
(45) Date de publication et mention de la délivrance du brevet: **30.06.2021**
(21) Numéro de dépôt: 18729730.4
(22) Date de dépôt: 03.05.2018
(51) Int. Cl.: F16D 51/22, F16D 65/56, F16D 125/40, F16D 121/24

(54) **ACTIONNEUR POUR FREIN A TAMBOUR A ACTIONNEMENT AU MOINS EN PARTIE ELECTRIQUE A FONCTION DE RATTRAPAGE DE JEU INTÉGRÉE**
AKTUATOR FÜR EINE TROMMELBREMSE MIT ZUMINDEST TEILWEISE ELEKTRISCHER BETÄTIGUNG UND INTEGRIERTE LÜFTSPIELNACHSTELLFUNKTION
ACTUATOR FOR A DRUM BRAKE WITH AT LEAST PARTIALLY ELECTRIC ACTUATION AND BUILT-IN PLAY ADJUSTING FUNCTION

(30) Priorité: 04.05.2017 FR 1753952
(43) Date de publication de la demande: 11.03.2020
(73) Titulaire: Foundation Brakes France, 93700 Drancy (FR)
(72) Inventeur: HACLIN, Léna, 94260 Fresnes (FR); DUPAS, Christophe, 91120 Palaiseau (FR)
(74) Mandataire: Brevalex
(86) Numéro de dépôt international: PCT/FR2018/051103
(87) Numéro de publication internationale: WO 2018/203003

(56) Documents cités:
- DE-A1- 19 858 642
- FR-A1- 2 767 886

## Description

### DOMAINE TECHNIQUE ET ÉTAT DE LA TECHNIQUE ANTÉRIEURE

La présente invention se rapporte à un actionneur de frein à tambour à fonction de rattrapage de jeu intégrée et à un frein à tambour à actionnement au moins en partie électrique et à un frein à tambour à actionnement électrique de véhicule automobile comportant au moins un tel actionneur.

Un frein à tambour d'un véhicule automobile comporte :
- un plateau fixe,
- un tambour, monté à rotation par rapport à un plateau, qui est destiné à être porté par une roue,
- au moins un segment de freinage, de courbure correspondant à un rayon d'une jupe interne de friction du tambour, qui est monté mobile sur le plateau entre une position inactive dans laquelle il est rappelé vers l'axe du tambour avec un jeu déterminé par rapport à la jupe de friction, et une position active dans laquelle il est en appui radialement contre le jupe de friction. En général, un frein à tambour comporte deux segments de freinage, présentant des courbures opposées. Les deux segments peuvent être mobiles en rotation autour d'un point fixe au niveau d'une de leurs extrémités ou alors être flottant, i.e. que l'effort de sortie du segment d'entrée est renvoyé sur le segment de sortie ce qui a pour effet d'amplifier l'effort de freinage,
- un actionneur susceptible de solliciter au moins l'un des segments de freinage vers sa position active.

Dans le cas d'un frein à tambour à actionnement hydraulique, l'actionneur est un cylindre de roue fixé sur le plateau et comportant un corps dans lequel au moins un piston est destiné à coulisser et à transmettre un effort au segment de freinage. Afin de conserver un jeu déterminé sensiblement identique tout au long de la durée de vie entre le segment de freinage et la jupe de friction compensant l'usure des segments de freinage, un dispositif de rattrapage automatique d'usure est prévu , celui-ci est disposé entre les deux segments parallèlement au cylindre de frein.

On cherche à développer les freins à tambour à actionnement au moins en partie électrique, il peut s'agir soit uniquement de l'actionnement du frein de parking, soit l'actionnement complet du frein à tambour.

En outre, on cherche à réduire l'encombrement des différents éléments composant le frein à tambour

Le document DE19858642 A1 montre un actionneur d'après le préambule de la revendication 1.

### EXPOSÉ DE L'INVENTION

C'est par conséquent un but de la présente invention d'offrir un actionneur pour frein à tambour à actionnement au moins en partie électrique remplissant également la fonction de rattrapage de jeu.

Le but énoncé ci-dessus est atteint par un actionneur de type vis-écrou, l'écrou étant destiné à être entrainé en rotation par un moteur électrique pour déplacer axialement la vis en vue d'une application d'au moins un segment de frein sur le tambour, l'actionneur comportant un élément de réglage monté dans l'écrou et coopérant avec la vis, ledit élément de réglage ayant une position modifiable en fonction de l'usure de la garniture d'au moins un segment de freinage sous l'action de la vis, de sorte que l'élément de réglage fixe la position repos de la vis dans l'écrou.

Un jeu fonctionnel entre la vis et l'élément de réglage est prévu de sorte que, lors d'une phase de freinage, l'élément de réglage est bloqué en rotation par la vis lorsque la course parcourue par la vis est supérieure au jeu fonctionnel du frein à tambour, l'élément de réglage se déplace alors longitudinalement, dans l'écrou et de sorte que, lorsque la phase de freinage est terminée, la course retour de la vis est limitée par l'élément réglage qui forme butée.

L'actionneur électrique intègre la fonction de rattrapage automatique de jeu, l'élément de réglage étant disposé dans l'écrou, l'encombrement de l'actionneur n'est pas augmenté. En outre il est de fonctionnement robuste et fiable.

Par exemple l'élément de réglage présente un coefficient de frottement par rapport à l'écrou supérieur à celui de la vis par rapport à l'écrou provoquant une augmentation de l'effort requis pour déplacer la vis lorsqu'elle entre en contact avec l'élément de réglage, cette augmentation est détectée, ce qui provoque l'arrêt de l'entraînement de l'écrou par le moteur électrique et définit la nouvelle position repos de la vis.

En d'autres termes, l'actionneur comporte un élément de réglage déplaçable dans un sens de déplacement en vue du freinage sous l'action de la vis lorsque la vis a parcouru plus que le jeu fonctionnel et formant butée pour la vis afin que son déplacement soit égal au jeu fonctionnel dans le sens de retour en position repos de la vis.

Dans un premier exemple de réalisation, l'actionneur est utilisé uniquement pour l'actionnement du frein de parking, dans ce cas il peut avantageusement être disposé à côté d'un actionneur pour le freinage de service, par exemple à côté d'un actionneur hydraulique tel qu'un cylindre de roue hydraulique.

Dans un autre exemple de réalisation, il sert pour le freinage de service remplaçant par exemple un cylindre de roue hydraulique et pour le frein de parking.

De plus, l'actionneur est mis en œuvre pour le freinage de secours.

La présente invention a alors pour objet un actionneur pour frein à tambour comportant un système vis-écrou destiné à être activé par un moteur électrique , ledit système vis écrou s'étendant suivant un axe longitudinal, une première extrémité longitudinale de la vis faisant saillie de l'écrou et étant destinée à être en appui contre un segment de freinage du frein à tambour et à se déplacer le long de l'axe longitudinal, et un élément de réglage monté dans l'écrou et coopérant avec l'écrou, dans lequel ledit élément de réglage est apte à être immobilisé en rotation par la vis dans un premier sens de déplacement, dans lequel la vis sort de l'écrou, lorsque la vis a parcouru au moins une course donnée dans le premier sens de déplacement, dans lequel l'élément de réglage forme une butée longitudinale limitant le déplacement de la vis dans l'écrou dans un deuxième sens de déplacement opposé au premier sens de déplacement, lorsque la vis a parcouru la course donnée dans le deuxième sens de déplacement.

Dans un exemple de réalisation, l'écrou comporte un corps d'axe longitudinal destiné à être entrainé en rotation autour de l'axe longitudinal par le moteur électrique, ledit corps comportant une première face d'extrémité longitudinale, une deuxième face d'extrémité longitudinale et un alésage débouchant au moins dans la première face d'extrémité longitudinale, ledit alésage comportant un taraudage, dans lequel la vis comporte une première portion munie d'un filetage du côté de sa première extrémité longitudinale coopérant avec le taraudage, et une deuxième portion du côté d'une deuxième extrémité longitudinale, les première et deuxième portions se raccordant par une face d'épaulement transversale, dans lequel l'élément de réglage est monté autour de la deuxième portion de la vis, de sorte que la vis puisse coulisser par rapport à l'élément de réglage sur la course donnée, l'élément de réglage comportant à une première extrémité longitudinale une face d'extrémité en regard de la face d'épaulement de la vis, la distance séparant la face d'extrémité de l'élément de réglage et la face d'épaulement étant sensiblement égale à la course donnée, l'actionneur comportant également des moyens d'immobilisation en rotation de l'élément de réglage autour de l'axe longitudinal par la vis dans le premier sens de déplacement lorsque la vis s'est déplacée d'au moins la course donnée, l'élément de réglage étant tel que lorsque la face d'épaulement de la vis entre en contact avec la face d'extrémité de l'élément de réglage, le déplacement de la vis dans le deuxième sens de déplacement est limité.

Par exemple, les moyens d'immobilisation en rotation comportent un doigt en saillie transversale de la deuxième portion et une face d'appui portée par une deuxième extrémité longitudinale de l'élément de réglage opposée à la première extrémité longitudinale, de sorte que, lorsque la vis s'est déplacée d'au moins la course donnée dans le premier sens de déplacement, la face d'appui vienne en contact du doigt immobilisant en rotation l'élément de réglage qui se déplace le long de l'axe longitudinal dans le premier sens de déplacement et de sorte que, lorsque la vis se déplace dans le deuxième sens de déplacement au moins sur une partie de sa course, le doigt s'éloigne de la face d'appui.

Selon une caractéristique additionnelle, la surface d'appui est dans un plan contenant l'axe longitudinal.

De préférence, le filetage de l'élément de réglage comporte un matériau offrant un coefficient de frottement par rapport au taraudage de l'écrou supérieur au coefficient de frottement du matériau du filetage d e la première portion de la vis par rapport au taraudage de l'écrou. Avantageusement, l'élément de réglage est en matériau plastique, en Nylon® ou en caoutchouc.

La deuxième face d'extrémité de l'écrou est par exemple configurée pour coopérer avec un deuxième segment de freinage.

La présente invention a également pour objet un ensemble comportant un actionneur selon l'invention et au moins un segment de freinage pour la réalisation d'un frein à tambour, dans lequel la course donnée correspond à un jeu fonctionnel du frein à tambour.

La présente invention a également pour objet un frein à tambour électrique comprenant un plateau au moins un actionneur selon l'invention, au moins segments de frein, un moteur électrique et un tambour, le moteur électrique étant destiné à entrainer en rotation l'écrou de l'actionneur à la fois en phase de freinage de service et en phase d'application d'un frein de parking.

La présente invention a également pour objet un frein à tambour comportant un plateau, au moins cylindre de roue hydraulique destiné à appliquer au moins un segment de freinage contre un tambour en phase de freinage de service , au moins un actionneur selon l'invention, au moins un segment de frein, un moteur électrique et un tambour, le moteur électrique étant destiné à entrainer en rotation l'écrou de l'actionneur pour provoquer l'application du frein de parking

Avantageusement, le frein à tambour comporte des moyens de détection du contact entre la vis et l'élément de réglage lors d'un déplacement de la vis dans le deuxième sens de déplacement. Par exemple, les moyens de détection comportent des moyens de mesure du courant circulant dans le moteur électrique et de détection d'une augmentation du courant au-delà d'un seuil donné.

### BRÈVE DESCRIPTION DES DESSINS

La présente invention sera mieux comprise sur la base de la description qui va suivre et des dessins en annexe sur lesquels:
- la figure 1 est une vue de face d'un frein à tambour comportant un actionneur selon un exemple de réalisation,
- la figure 2 est une vue en coupe longitudinale d'un exemple de réalisation d'un actionneur pour frein de parking d'un frein à tambour,
- la figure 3 est une vue en coupe longitudinale représentée en perspective de l'actionneur de la figure 2,
- les figures 4A à 4D sont des vues en coupe de l'actionneur des figures 2 et 3 dans différents états de fonctionnement,
- la figure 5 est une vue en coupe longitudinale de l'actionneur de la figure 2 monté dans un carter,
- la figure 6 est une vue en perspective de l'écrou seul,
- la figure 7 est une vue en perspective d'un embout monté dans l'écrou et destiné à être en appui contre une face arrière du segment de frein,
- la figure 8 est une vue en perspective d'une roue dentée transmettant un mouvement de rotation entre le moteur et l'écrou,
- la figure 9 est une vue en perspective d'un manchon de guidage mis en œuvre dans l'actionneur de la figure 2.

### EXPOSÉ DÉTAILLÉ DE MODES DE RÉALISATION PARTICULIERS

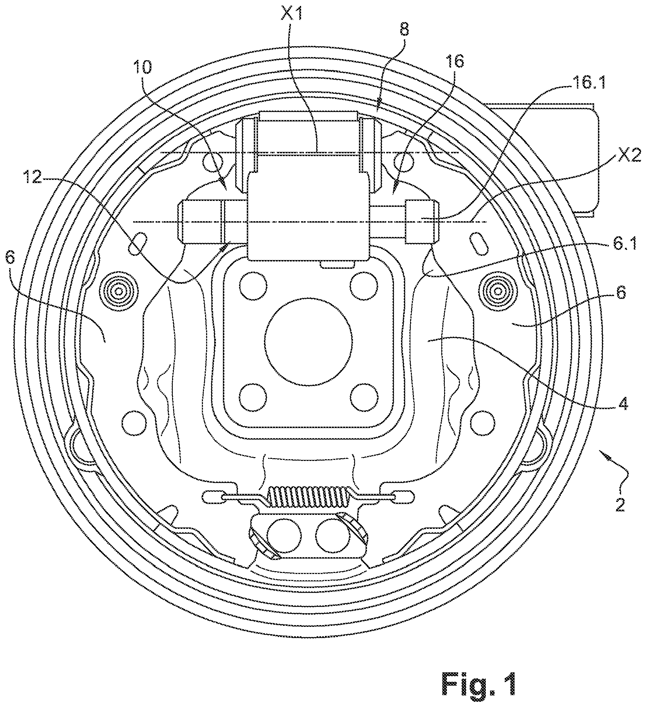

Sur la figure 1, on peut voir un frein à tambour 2 d'un véhicule automobile destiné à être monté sur une fusée d'une roue (non représentée). Un frein à tambour est destiné à être fixé au niveau d'une roue.

Le frein à tambour 2 comporte un tambour (non représenté) solidaire en mouvement de la roue (non représentée), un plateau 4 qui est destiné à être monté fixe sur la fusée, deux segments de freinage 6 montés sur le plateau 4 et mobile par rapport à celui-ci, un actionneur de freinage 8 fixé sur le plateau 4 entre les segments de freinage et destiné à appliquer les segments de freinage 6 contre le tambour.

L'actionneur 8 est par exemple un cylindre de roue hydraulique ou un actionneur électrique.

Les segments de freinage ont chacun une forme d'arc, dont la convexité est orientée vers l'extérieur et leurs surfaces extérieures destinées à entrer en contact avec le tambour sous l'action de l'actionneur de freinage sont munies d'une garniture qui s'usent au cours de l'actionnement du frein par abrasion.

Le frein à tambour comporte également un actionneur de frein de parking 10 destiné en général à maintenir le véhicule immobile lorsqu'il est stationné. Il est généralement activé lorsque le véhicule est à l'arrêt.

Dans l'exemple représenté et de manière avantageuse, l'actionneur de frein de parking 10 est disposé parallèlement et à proximité de l'actionneur de freinage 8. D'autres emplacements sont envisageables, par exemple il peut être monté sur le plateau de manière diamétralement opposée au cylindre de roue 8.

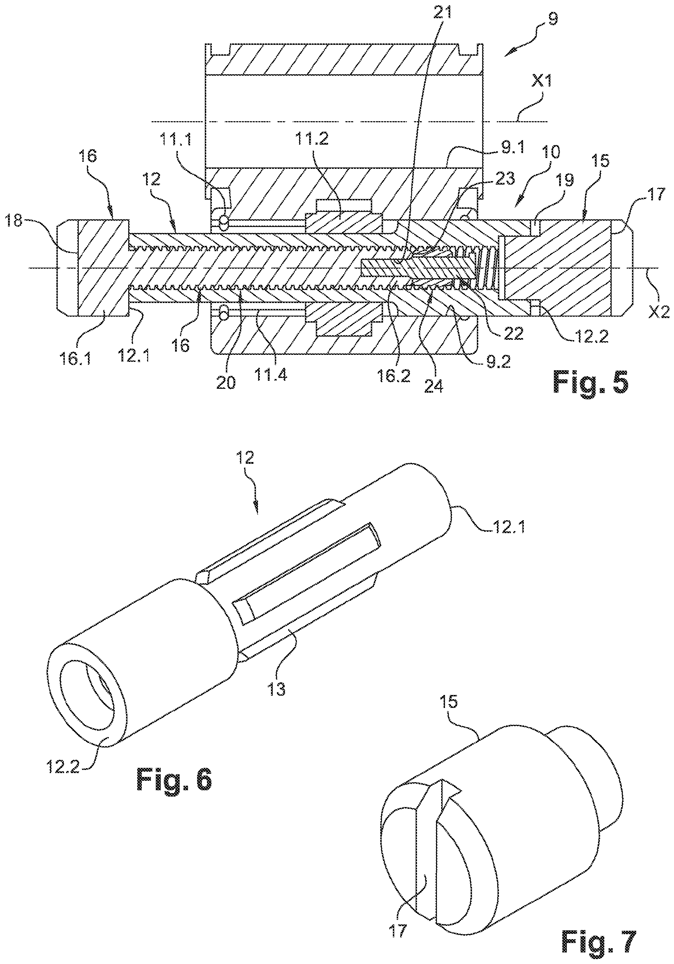

L'actionneur 12 et le cylindre de roue 8 sont dans l'exemple représenté monté dans un carter commun 9 fixé sur le plateau 4. Le carter comporte deux alésages parallèles 9.1, 9.2 d'axe X1, X2 parallèles, recevant respectivement le cylindre de roue 8 et l'actionneur 12 (figure 5).

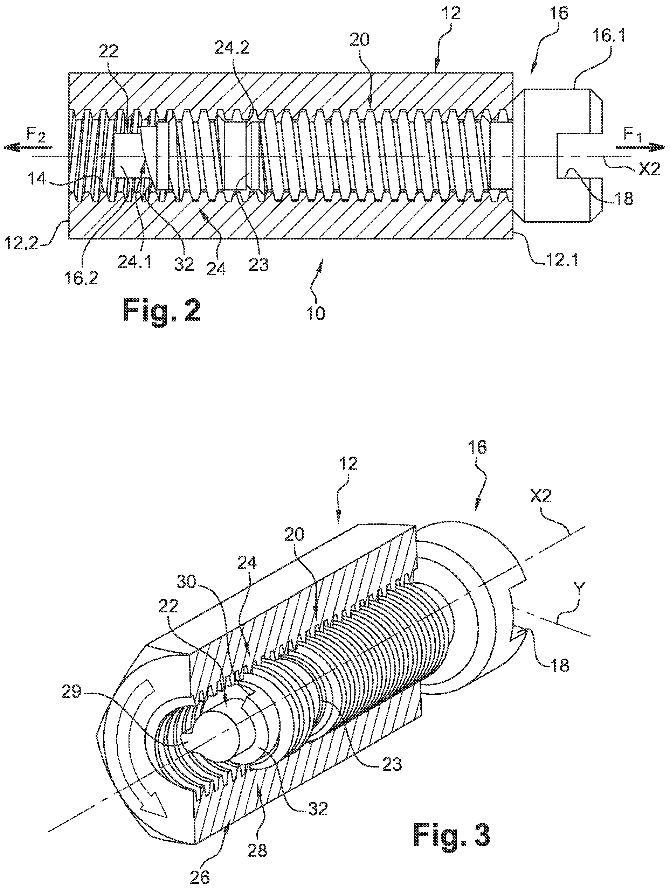

Sur les figures 2 et 3, on peut voir en détail un exemple de réalisation d'actionneur 10 selon l'invention, utilisé pour actionner le frein de parking. Il comporte un corps extérieur 12 d'axe longitudinal X2, comportant un alésage 14 muni d'un taraudage. Le corps 12 forme un écrou et sera désigné ainsi dans la suite de la description. L'écrou 12 est destiné à être entraîné en rotation autour de son axe par un moteur électrique (non représenté) par l'intermédiaire d'une liaison mécanique (non représentée).

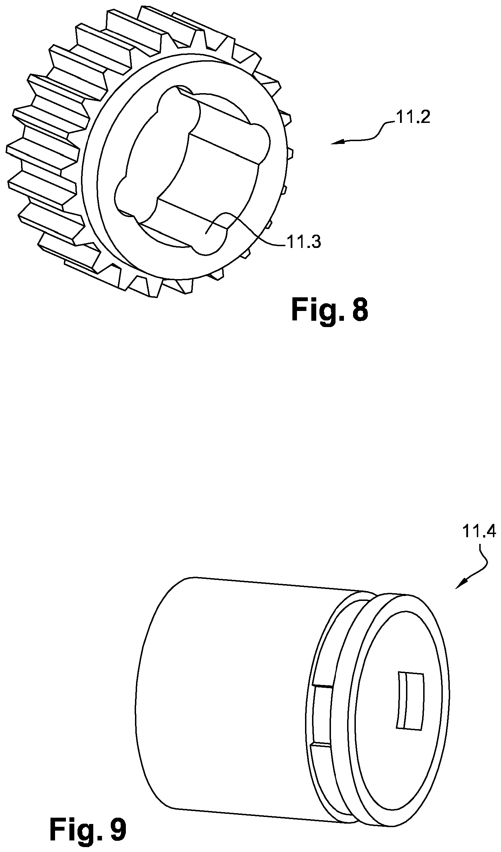

La liaison entre le moteur électrique et l'écrou 12 est telle qu'elle permet un entraînement en rotation de l'écrou par le moteur. Dans l'exemple représenté une roue dentée 11.2 (figure 8) est montée autour de l'écrou 12 et est solidaire de celui-ci en rotation. Dans l'exemple représenté, la solidarisation en rotation est obtenue par coopération de cannelures et d'empreintes correspondantes. Dans l'exemple représenté, les cannelures 13 (figures 5 et 6) s'étendent longitudinalement le long du corps de l'écrou et des empreintes 11.3 (figure 8) correspondantes sont réalisées dans la périphérie du passage central de la roue. Dans une variante, une clavette est prévue entre la roue et l'écrou.

Le dispositif comporte également, dans l'exemple représenté, des moyens de centrage de l'écrou 12 dans l'alésage 9.2. Dans l'exemple représenté, les moyens de centrage comportent un manchon de centrage 11.4 (figure 9) entourant l'écrou et disposé dans l'alésage 9.2 entre la roue 11.2 et la tête 16.1 d'une vis 16 décrite ci-dessous.

Par exemple, un jonc d'arrêt 11.1 assure le maintien en translation du manchon de centrage 11.4 dans l'alésage 9.2. A cet effet, le manchon de centrage 11.4 comporte une gorge dans sa surface extérieure et l'alésage 9.2 comporte également une gorge, en regard de celle formée dans le manchon de centrage lorsque le manchon cde centrage este ne place, le jonc d'arrêt 11.1 étant monté dans les gorges.

Le moteur électrique est par exemple monté sur une face du plateau 4 opposée à celle portant les actionneurs 8 et 10 et les segments 6, la liaison mécanique traversant le plateau 4.

L'actionneur de frein de parking 10 comporte également un élément fileté 16 d'axe longitudinal X2 coopérant avec le taraudage de l'écrou 12 et désigné par la suite « vis». La vis 16 est en appui par une extrémité longitudinale aval 16.1, formant tête, contre une face intérieure 6.1 d'un des segments de freinage 6, de sorte à appliquer un effort le long de l'axe longitudinal X2 sur le segment de freinage 6 pour l'appliquer contre le tambour lors d'une phase de freinage. La vis 16 est immobile en rotation par rapport au plateau 4. Ainsi une rotation de l'écrou 12 provoque une translation de la vis 16 le long de l'axe X2. De manière avantageuse, le blocage en rotation de la vis 16 par rapport au plateau 4 est obtenu par la liaison entre la vis 16 et le segment de freinage 6. De manière avantageuse et dans l'exemple représenté, l'extrémité longitudinale aval 16.1 de la vis 16 comporte une tête munie d'une fente 18 s'étendant selon un axe Y orthogonal à l'axe longitudinal X2 et logeant une partie de la face intérieure 6.1 du segment de freinage 6 empêchant la vis de tourner. D'autres moyens de blocage direct dans le plateau 4 et la vis 16 pourraient être prévus.

Le sens de déplacement de la vis en vue d'un freinage est symbolisé par la flèche F1 et le sens de déplacement de la vis vers un retour en position repos est symbolisé par la flèche F2.

L'amont et l'aval sont à considérer par rapport au sens de déplacement en vue d'un freinage (flèche F1).

L'écrou 12 comporte une face d'extrémité longitudinale aval 12.1 dans une face d'extrémité longitudinale amont 12.2 opposée à la face d'extrémité longitudinale aval 12.1 destinée, par exemple, à être en appui contre l'autre segment de frein afin d'exercer sur lui une force tendant à l'appliquer contre le tambour. Dans l'exemple représenté, l'alésage 14 débouche dans les deux faces d'extrémité longitudinales 12.1 et 12.2. L'appui entre la face d'extrémité 12.2 et la face arrière de l'autre segment de frein est par exemple réalisé par une douille ou un embout 15, représenté seul la figure 7, en appui directement par une face sur la face arrière de l'autre segment de freinage 6. L'embout 15 est inséré à force dans l'alésage 14 et comporte une fente 17 pour recevoir la face arrière de l'autre segment de frein. L'embout est monté dans l'alésage avec une possibilité de rotation autour de l'axe longitudinal X2. Dans l'exemple représenté, une rondelle de friction ou un élément lubrifiant 19 est introduit entre l'embout et la face d'extrémité longitudinale 12.2 afin de réduire les frottements.

La vis 16 comporte une première portion 20 filetée du côté de l'extrémité longitudinale aval 16.1, et une deuxième portion 22 exempte de filetage du côté de l'extrémité longitudinale amont 16.2. La deuxième portion 22 présente un diamètre plus faible que la première portion 20 de sorte que la première portion filetée 20 se raccorde à la deuxième portion 22 par une surface annulaire 23 formant face d'épaulement orienté vers l'amont.

L'actionneur de frein de parking 10 comporte également un élément de réglage mobile 24 comprenant un manchon muni sur sa surface extérieure d'un filetage coopérant avec le taraudage de l'écrou 12. L'élément de réglage 24 est monté autour de la deuxième portion 22 de la vis 16, de sorte que la vis 16 puisse coulisser le long de l'axe longitudinal par rapport à l'élément de réglage 24.

L'élément de réglage 24 est destiné à assurer le rattrapage de l'usure des garnitures des segments de freinage.

Le dispositif comporte des moyens d'immobilisation en rotation 26 de l'élément de réglage autour de l'axe longitudinal X2.

Les moyens d'immobilisation en rotation 26 comportent un élément d'immobilisation en rotation 28 de l'élément de réglage 24 disposé sur la deuxième portion 22 de la vis coopérant avec une face d'appui 30 de l'élément de réglage 24. Dans l'exemple représenté, l'élément d'immobilisation en rotation 28 comporte un doigt 29 en saillie transversalement vers l'extérieur, et contre lequel la face d'appui 30 est destinée à venir en appui. Dans l'exemple représenté, la face d'appui 30 est disposée à une extrémité longitudinale amont 24.1 de l'élément de réglage 24 et s'étend dans un plan orienté de sorte que la face d'appui 30 puisse venir en appui sensiblement plan contre le doigt 29. Dans l'exemple représenté, la face d'appui 30 est dans un plan orienté radialement. De plus, l'extrémité amont de l'élément de réglage 24 est conformée en rampe 32, de sorte que le doigt 29 glisse sur la rampe et que la face d'appui 30 vienne en appui contre le doigt 29.

Sur la figure 5, on peut voir une vue en coupe de l'actionneur. L'élément d'immobilisation en rotation 28 est inséré et fixé dans une cavité longitudinale 21 de la vis. L'élément d'immobilisation en rotation est fixe en rotation dans la cavité 21.

Un jeu j dans la direction longitudinale X2 est prévu entre l'extrémité aval 24.2 de l'élément de réglage 24 et la face d'épaulement 23 de la vis 16.

Le jeu j correspond au jeu fonctionnel du frein à tambour, i.e. la distance de déplacement nécessaire des segments pour entrer en contact avec le tambour. Ce jeu fonctionnel est fixé. La distance entre une face aval du doigt 29 et la face amont de l'élément de réglage 24 est également égale au jeu j.

Dans l'exemple représenté, le doigt 29 est disposé à la deuxième extrémité de la vis 16. En variante, le doigt 29 pourrait être situé dans une position intermédiaire de la deuxième portion 22.

L'élément de réglage 24 est tel qu'il offre une résistance à la rotation dans l'aval vers l'amont dans le sens de la flèche F2, i.e. dans le sens de déplacement de la vis 16 en phase de retour dans sa position repos.

De préférence, l'élément de réglage mobile est réalisé en un matériau offrant un coefficient de frottement élevé par rapport au matériau du taraudage de l'écrou. L'élément de réglage est réalisé dans un matériau à faible caractéristique de déformation par exemple en matériau plastique, en Nylon®, en caoutchouc.

La vis et l'écrou sont par exemple réalisés en métal ou alliage métallique, tel que l'acier, le laiton ou le bronze par exemple.

En variante, la résistance au déplacement de l'élément de réglage peut être obtenue au moyen de rondelles souples ou d'éléments déformables.

En variante, on pourrait envisager que seul le filetage de l'élément de réglage soit réalisé dans un matériau offrant un coefficient de frottement élevé.

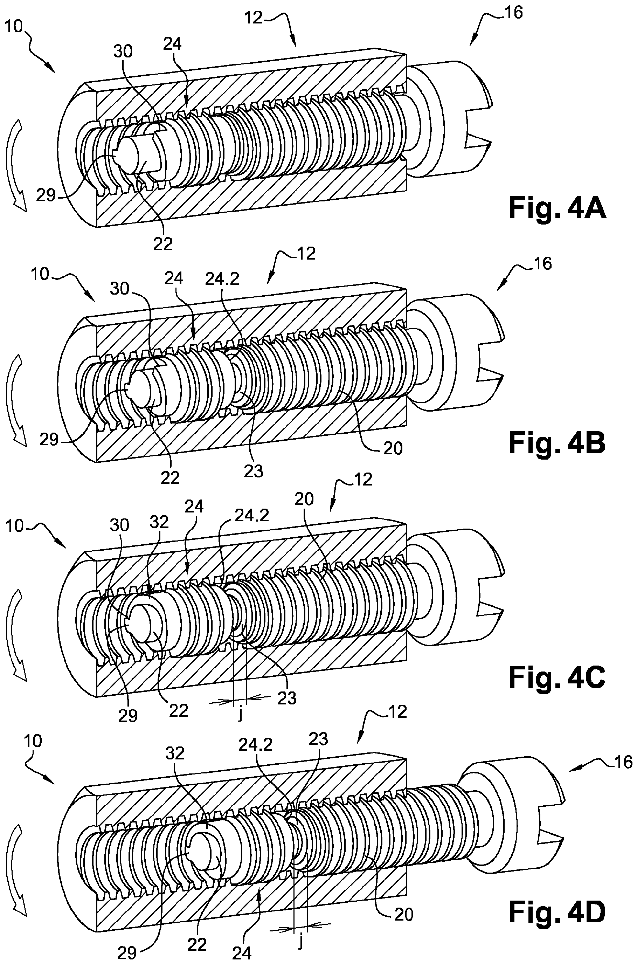

Le fonctionnement de l'actionneur de frein de parking va maintenant être décrit à l'aide des figures 4A à 4D illustrant différents états de l'actionneur.

En phase de freinage de service, i.e. lorsque le véhicule est en phase de roulage et que le conducteur souhaite ralentir, voire arrêter le véhicule, son action de freinage provoque un déplacement des segments de freinage 6 en direction du tambour et lorsque les segments de freinage 6 se sont déplacés du jeu fonctionnel, les garnitures entrent en contact avec le tambour. Le frottement entre les garnitures et le tambour provoque le ralentissement de la roue, mais également l'usure des garnitures, ce qui augmente le jeu entre les faces radialement extérieures des garnitures et le tambour. Si cette usure n'était pas compensée, la course à parcourir par les segments pour entrer en contact avec le tambour serait augmentée et la sensation de freinage perçue par le conducteur serait dégradée.

Lors d'un freinage de service, l'actionneur de frein de parking n'est généralement pas sollicité.

Lorsque le véhicule est en stationnement, le conducteur commande l'application du frein de parking par exemple en pressant un bouton de commande du frein de parking.

Le moteur électrique est alimenté en courant de sorte qu'il met en rotation de l'écrou 12 via la liaison mécanique dans un sens de dévissage de la vis 16 par rapport à l'écrou 12. La vis 16 étant bloquée en rotation autour de l'axe longitudinal par rapport au plateau, la rotation de l'écrou 12 dans le sens de dévissage de la vis 16 provoque un déplacement de la vis 16 le long de l'axe longitudinal X2 dans le sens de la flèche F1, la vis 16 pousse alors le segment de freinage 6 radialement vers l'extérieur, qui entre en contact avec le tambour. Par réaction, l'autre segment de freinage est appliqué contre le tambour du fait de l'appui entre l'écrou et l'autre segment.

Si le déplacement de la vis 16 est inférieur au jeu fonctionnel j, la face d'appui 30 de l'élément de réglage 24 ne vient pas en appui contre le doigt 29 de la vis 16, l'élément de réglage 24 n'est alors pas immobilisé en rotation autour de l'axe longitudinal X2 et ne se déplace pas longitudinalement (figure 4A puis figure 4B).

L'expression « distance égale au jeu fonctionnel» est à comprendre comme « distance égale ou sensiblement égale au jeu fonctionnel »du fait notamment des tolérances de fabrication.

Si le déplacement de la vis 16 est égal au jeu fonctionnel, la surface d'appui 30 de l'élément de réglage 24 vient en contact avec le doigt 29 de la vis 16 (figure 4C), mais le déplacement de la vis 16 s'interrompt et l'élément de réglage 24 n'est pas entrainé le long de l'axe longitudinal X2.

Lorsque l'opérateur désactive le freinage de parking, par exemple en appuyant à nouveau sur le bouton de commande du frein de parking, le moteur est alimenté en courant de sorte que l'écrou 12 tourne dans le sens de vissage de la vis 16. La vis 16 se déplace dans l'écrou dans le sens de la flèche F2 jusqu'à ce que la face d'épaulement 23 entre en contact avec la face aval 24.2 de l'élément de réglage 24. L'élément de réglage 24 présentant un coefficient de frottement par rapport au taraudage de l'écrou 12 qui supérieur à celui de la vis 16 par rapport au taraudage de l'écrou 12, un serrage se produit entre la vis 16 et l'élément de réglage 24. La détection du serrage est par exemple réalisée par une mesure d'une augmentation du courant au niveau du moteur. En variante, un capteur d'effort pourrait être prévu. L'élément de réglage 16 reste immobile le long de l'axe longitudinal.

Lors d'une phase de freinage, si le déplacement de la vis 16 est supérieur au jeu fonctionnel j, alors, lorsque la vis 16 a parcouru le jeu fonctionnel j, la surface d'appui 30 de l'élément de réglage 24 vient en contact avec le doigt 29. L'élément de réglage 24 est alors immobilisé en rotation autour de l'axe longitudinal X2. Puisque l'écrou 16 continue à tourner, l'élément de réglage 24 se déplace le long de l'axe longitudinal X2 dans le sens de la flèche F1 ainsi que la vis 16. L'élément de réglage 24 se déplace dans le sens F1 tant que le moteur est activé en vue d'un freinage. La course de déplacement de l'élément de réglage 24 correspond donc au déplacement des segments de freinage au-delà du jeu fonctionnel, i.e. correspond à l'usure des garnitures de freinage (figure 4D).

Lorsque l'opérateur désactive le frein de parking, le moteur est alimenté en courant de sorte que l'écrou 12 tourne dans le sens de vissage de la vis 16, le segment de freinage 6 s'écarte alors du tambour. La vis 16 se déplace dans le sens de la flèche F2 librement dans l'élément de réglage 24 sur une distance égale au jeu fonctionnel j, le doigt 29 s'écarte de la surface d'appui 30 de l'élément de réglage 24. La face d'épaulement 23 de la vis 16 se rapproche de la face aval 24.2 de l'élément de réglage 24 jusqu'à venir en contact avec elle, un serrage se produit. La détection du contact est par exemple faite par une mesure de l'augmentation du courant au niveau du moteur.

La vis 16 s'est alors déplacée du jeu fonctionnel j uniquement. L'usure des segments de freinage est ainsi rattrapée.

Dans un autre mode de réalisation, le frein à tambour est à actionnement entièrement électrique au moins en fonctionnement normal. Le cylindre de roue de frein à tambour de la figure 1 est supprimé et l'actionneur est utilisé à la fois pour le freinage de service et pour l'application du frein de parking. Dans ce mode de réalisation, l'usure peut être rattrapée pendant un freinage de service et pendant l'application du frein de parking

L'actionneur électrique assurant également la fonction de rattrapage automatique de jeu présente une grande compacité, ce qui particulièrement intéressant dans le cas de frein à tambour. En outre il requiert un nombre de pièces réduit.

Lorsque les segments de frein atteignent leur usure maximale et doivent être remplacés, on peut prévoir de remplacer les segments et l'actionneur en effet il n'est pas aisé de réinitialiser l'actionneur, i.e. de ramener la vis de réglage dans une position correspondant à une usure nulle des segments.

Concernant le montage, le vis 16, sans l'élément d'immobilisation en rotation 28, ni l'élément de réglage 24, est totalement vissée dans l'écrou 12. Puis l'élément de réglage 24 est monté par l'extrémité 12.2 et l'élément d'immobilisation en rotation 28 est ensuite emmanché dans la cavité 21 de la vis. L'emmanchement est réalisé à force pour assurer une solidarisation axiale et longitudinale l'élément d'immobilisation en rotation 28 dans la cavité.

La présente invention s'applique notamment aux freins à tambour pour véhicules automobiles, par exemples aux véhicules automobiles à usage particulier.

### REFERENCES

2 Frein à tambour
4 Plateau
6 Segment de freinage
8 Cylindre de roue
9 Carter
9.1 Alésage
9.2 Alésage
10 Actionneur
11.1 Jonc d'arrêt
11.2 Roue dentée
11.3 Empreinte
11.4 Manchon de centrage
12 Ecrou
12.1 Face d'extrémité longitudinale aval
12.2 Face d'extrémité longitudinale amont
13 Cannelures
14 Alésage
15 Embout
16 Vis
16.1 Extrémité longitudinale aval
16.2 Extrémité longitudinale amont
17 Fente
18 Fente
19 Rondelle de friction
20 Première portion
22 Deuxième portion
21 Cavité
23 Face d'épaulement
24 Elément de réglage
26 Moyens d'immobilisation en rotation
28 Elément d'immobilisation en rotation 28
29 Doigt
30 Face d'appui
32 Rampe
X1 Axe longitudinal de l'alésage du cylindre de roue
X2 Axe longitudinal de l'actionneur.

## Revendications

1. Actionneur pour frein à tambour comportant un système vis-écrou destiné à être activé par un moteur électrique , ledit système vis écrou s'étendant suivant un axe longitudinal (X2), une première extrémité longitudinale (16.1) de la vis (16) faisant saillie de l'écrou (12) et étant destinée à être en appui contre un segment de freinage du frein à tambour et à se déplacer le long de l'axe longitudinal (X2), **caractérisé en ce que** l'actionneur comporte un élément de réglage (24) monté dans l'écrou (12) et coopérant avec l'écrou (12), **en ce que** ledit élément de réglage (24) est apte à être immobilisé en rotation par la vis dans un premier sens de déplacement, lors duquel la vis (16) sort de l'écrou, lorsque la vis (16) a parcouru au moins une course donnée dans le premier sens de déplacement (F1), et **en ce que** l'élément de réglage (24) forme une butée longitudinale limitant le déplacement de la vis (24) dans l'écrou (12) dans un deuxième sens de déplacement (F2) opposé au premier sens de déplacement (F1), lorsque la vis (16) a parcouru la course donnée dans le deuxième sens de déplacement (F2).

2. Actionneur selon la revendication 1, dans lequel l'écrou (12) comporte un corps d'axe longitudinal (X2) destiné à être entrainé en rotation autour de l'axe longitudinal (X2) par le moteur électrique, ledit corps comportant une première face d'extrémité longitudinale (12.1), une deuxième face d'extrémité longitudinale (12.2) et un alésage (14) débouchant au moins dans la première face d'extrémité longitudinale (12.1), ledit alésage (14) comportant un taraudage, dans lequel la vis (16) comporte une première portion (20) munie d'un filetage du côté de sa première extrémité longitudinale coopérant avec le taraudage, et une deuxième portion (22) du côté d'une deuxième extrémité longitudinale, les première (20) et deuxième (22) portions se raccordant par une face d'épaulement transversale (23), dans lequel l'élément de réglage (24) est monté autour de la deuxième portion (22) de la vis (16, de sorte que la vis (16) puisse coulisser par rapport à l'élément de réglage (24) sur la course donnée, l'élément de réglage (24) comportant à une première extrémité longitudinale une face d'extrémité (24.2) en regard de la face d'épaulement (23) de la vis (16), la distance séparant la face d'extrémité (24.2) de l'élément de réglage (24) et la face d'épaulement (23) étant sensiblement égale à la course donnée, l'actionneur comportant également des moyens d'immobilisation en rotation (26) de l'élément de réglage (24) autour de l'axe longitudinal par la vis (16) dans le premier sens de déplacement (F1) lorsque la vis (16) s'est déplacée d'au moins la course donnée, l'élément de réglage (24) étant tel que lorsque la face d'épaulement (23) de la vis (16) entre en contact avec la face d'extrémité (24.2) de l'élément de réglage (24), le déplacement de la vis (16) dans le deuxième sens de déplacement (F2) est limité.

3. Actionneur selon la revendication 2, dans lequel les moyens d'immobilisation en rotation (26) comportent un doigt (29) en saillie transversale de la deuxième portion (22) et une face d'appui (30) portée par une deuxième extrémité longitudinale de l'élément de réglage (24) opposée à la première extrémité longitudinale, de sorte que, lorsque la vis (16) s'est déplacée d'au moins la course donnée dans le premier sens de déplacement (F1), la face d'appui (30) vienne en contact du doigt (29) immobilisant en rotation l'élément de réglage (24) qui se déplace le long de l'axe longitudinal dans le premier sens de déplacement (F1) et de sorte que, lorsque la vis (16) se déplace dans le deuxième sens de déplacement (F2) au moins sur une partie de sa course, le doigt (29) s'éloigne de la face d'appui (30).

4. Actionneur selon la revendication 3, dans lequel la surface d'appui (30) est dans un plan contenant l'axe longitudinal.

5. Actionneur selon l'une des revendications 2, 3 ou 4, dans lequel le filetage de l'élément de réglage (24) comporte un matériau offrant un coefficient de frottement par rapport au taraudage de l'écrou (12) supérieur au coefficient de frottement du matériau du filetage de la première portion (20) de la vis par rapport au taraudage de l'écrou (12).

6. Actionneur selon la revendication 5, dans lequel l'élément de réglage (24) est en matériau plastique, en Nylon® ou en caoutchouc.

7. Actionneur selon l'une des revendications 1 à 6, dans lequel la deuxième face d'extrémité (12.2) de l'écrou (12) est configurée pour coopérer avec un deuxième segment de freinage.

8. Ensemble comportant un actionneur selon l'une des revendications 1 à 7 et au moins un segment de freinage (6) pour la réalisation d'un frein à tambour, dans lequel la course donnée correspond à un jeu fonctionnel du frein à tambour.

9. Frein à tambour électrique comprenant un plateau au moins un actionneur (10) selon l'une des revendications 1 à 7, au moins segments de frein (6), un moteur électrique et un tambour, le moteur électrique étant destiné à entrainer en rotation l'écrou (12) de l'actionneur (10) à la fois en phase de freinage de service et en phase d'application d'un frein de parking.

10. Frein à tambour comportant un plateau (4), au moins cylindre de roue hydraulique (8) destiné à appliquer au moins un segment de freinage (6) contre un tambour en phase de freinage de service , au moins un actionneur (10) selon l'une des revendications 1 à 7, au moins un segment de frein (6), un moteur électrique et un tambour, le moteur électrique étant destiné à entrainer en rotation l'écrou (12) de l'actionneur (10) pour provoquer l'application du frein de parking

11. Frein à tambour selon la revendication 9 ou 10, comportant des moyens de détection du contact entre la vis (16) et l'élément de réglage (24) lors d'un déplacement de la vis (16) dans le deuxième sens de déplacement (F2).

12. Frein à tambour selon la revendication 11, dans lequel les moyens de détection comportent des moyens de mesure du courant circulant dans le moteur électrique et de détection d'une augmentation du courant au-delà d'un seuil donné.

## Patentansprüche

1. Aktuator für eine Trommelbremse, umfassend ein Schraube-Mutter-System, das dazu ausgelegt ist, durch einen Elektromotor aktiviert zu werden, wobei das Schraube-Mutter-System sich entlang einer longitudinalen Achse (X2) erstreckt, wobei ein erstes longitudinales Ende (16.1) der Schraube (16) von der Mutter (12) vorsteht und dazu ausgelegt ist, in Anlage gegen ein Bremssegment der Trommelbremse zu sein und sich entlang der longitudinalen Achse (X2) zu verlagern, **dadurch gekennzeichnet, dass** der Aktuator ein Regelungselement (24) umfasst, das in der Mutter (12) montiert ist und mit der Mutter (12) zusammenwirkt, dass das Regelungselement (24) dazu ausgelegt ist, gegen Drehung durch die Schraube in einer ersten Verlagerungsrichtung immobilisiert zu sein, während der die Schraube (16) aus der Mutter heraus tritt, wenn die Schraube (16) wenigstens einen gegebenen Weg in der ersten Verlagerungsrichtung (F1) durchlaufen hat, und dass das Regelungselement (24) einen longitudinalen Anschlag bildet, der die Verlagerung der Schraube (24) in der Mutter in einer zweiten Verlagerungsrichtung (F2) entgegengesetzt zu der ersten Verlagerungsrichtung (F1) begrenzt, wenn die Schraube (16) den gegebenen Weg in der zweiten Verlagerungsrichtung (F2) durchlaufen hat.

2. Aktuator nach Anspruch 1, bei dem die Mutter (12) einen Körper mit longitudinaler Achse (X2) umfasst, der dazu ausgelegt ist, durch den Elektromotor in Drehung um die longitudinale Achse (X2) herum angetrieben zu werden, wobei der Körper eine erste longitudinale Endfläche (12.1), eine zweite longitudinale Endfläche (12.2) und eine Bohrung (14) umfasst, die wenigstens in die erste longitudinale Endfläche (12.1) mündet, wobei die Bohrung (14) ein Innengewinde umfasst, wobei die Schraube (16) einen ersten Bereich (20) umfasst, der mit einem Außengewinde an der Seite ihres ersten longitudinalen Endes ausgestattet ist, das mit dem Innengewinde zusammenwirkt, und einen zweiten Bereich (22) auf der Seite eines zweiten longitudinalen Endes, wobei der erste Bereich (20) und der zweite Bereich (22) mittels einer transversalen Schulterfläche (23) verbunden sind, wobei das Regelungselement (24) um den zweiten Bereich (22) der Schraube (16) herum derart montiert ist, dass die Schraube (16) mit Bezug zu dem Regelungselement (24) auf dem gegebenen Weg verschoben werden kann, wobei das Regelungselement (24) an einem ersten longitudinalen Ende eine Endfläche (24.2) gegenüber der Schulterfläche (23) der Schraube (16) umfasst, wobei der Abstand, der die Endfläche (24.2) des Regelungselements (24) und die Schulterfläche (23) separiert, im Wesentlichen gleich dem gegebenen Weg ist, wobei der Aktuator ferner Mittel (26) zur Immobilisierung des Regelungselements (24) gegen Drehung um die longitudinale Achse mittels der Schraube (16) in der ersten Verlagerungsrichtung (F1) umfasst, wenn die Schraube (16) sich wenigstens um den gegebenen Weg verlagert hat, wobei das Regelungselement (24) derart ist, dass dann, wenn die Schulterfläche (23) der Schraube (16) in Kontakt mit der Endfläche (24.2) des Regelungselements (24) gelangt, die Verlagerung der Schraube (16) in der zweiten Verlagerungsrichtung (F2) begrenzt ist.

3. Aktuator nach Anspruch 2, bei dem die Mittel (26) zur Immobilisierung gegen Drehung einen Finger (29) umfassen, der transversal von dem zweiten Bereich (22) vorsteht, und eine Anlagefläche (30), die durch ein zweites longitudinales Ende des Regelungselements (24) entgegengesetzt zu dem ersten longitudinalen Ende getragen ist, derart, dass dann, wenn sich die Schraube (16) wenigstens um den gegebenen Weg in der ersten Verlagerungsrichtung (F1) verlagert hat, die Anlagefläche (30) in Kontakt mit dem Finger (29) gelangt, der das Regelungselement (24) gegen Drehung immobilisiert, das sich entlang der longitudinalen Achse in der ersten Verlagerungsrichtung (F1) verlagert, und derart, dass dann, wenn sich die Schraube (16) in der zweiten Verlagerungsrichtung (F2) wenigstens auf einem Teil ihres Wegs verlagert, der Finger (29) sich von der Anlagefläche (30) entfernt.

4. Aktuator nach Anspruch 3, bei dem die Anlagefläche (30) in einer Ebene ist, die die longitudinale Achse enthält.

5. Aktuator nach einem der Ansprüche 2, 3 oder 4, bei dem das Außengewinde des Regelungselements (24) ein Material umfasst, das einen Reibungskoeffizienten mit Bezug zu dem Innengewinde der Mutter (12) aufweist, der größer ist als der Reibungskoeffizient des Materials des Außengewindes des ersten Bereichs (20) der Schraube mit Bezug zu dem Innengewinde der Mutter (12).

6. Aktuator nach Anspruch 5, bei dem das Regelungselement (24) aus einem Kunststoffmaterial, aus Nylon® oder aus Kautschuk ist.

7. Aktuator nach einem der Ansprüche 1 bis 6, bei dem die zweite Endfläche (12.2) der Mutter (12) dazu konfiguriert ist, mit einem zweiten Bremssegment zusammenzuwirken.

8. Baugruppe, umfassend einen Aktuator nach einem der Ansprüche 1 bis 7 und wenigstens ein Bremssegment (6) für die Realisierung einer Trommelbremse, wobei der gegebene Weg einem funktionalen Spiel der Trommelbremse entspricht.

9. Elektrische Trommelbremse, umfassend eine Platte, wenigstens einen Aktuator (10) nach einem der Ansprüche 1 bis 7, wenigstens Bremssegmente (6), einen Elektromotor und eine Trommel, wobei der Elektromotor dazu ausgelegt ist, die Mutter (12) des Aktuators (10) sowohl in einer Betriebsbremsphase als auch in einer Phase einer Parkbremsanwendung in Drehung anzutreiben.

10. Trommelbremse, umfassend eine Platte (4), wenigstens einen hydraulischen Radzylinder (8), der dazu ausgelegt ist, wenigstens ein Bremssegment (6) gegen eine Trommel in einer Betriebsbremsphase zu beaufschlagen, wenigstens einen Aktuator (10) nach einem der Ansprüche 1 bis 7, wenigstens ein Bremssegment (6), einen Elektromotor und eine Trommel, wobei der Elektromotor dazu ausgelegt ist, die Mutter (12) des Aktuators (10) in Drehung anzutreiben, um die Anwendung der Parkbremse auszulösen.

11. Trommelbremse nach Anspruch 9 oder 10, umfassend Mittel zur Detektion des Kontakts zwischen der Schraube (16) und dem Regelungselement (24) während einer Verlagerung der Schraube (16) in der zweiten Verlagerungsrichtung (F2).

12. Trommelbremse nach Anspruch 11, bei der die Mittel zur Detektion Mittel zum Messen des Stroms, der in dem Elektromotor zirkuliert, und zur Detektion einer Zunahme des Stroms über eine gegebene Schwelle hinaus umfassen.

## Claims

1. An actuator for drum brake including a screw-nut system for being activated by an electric motor, said screw-nut system extending along a longitudinal axis (X2), a first longitudinal end (16.1) of the screw (16) protruding from the nut (12) and being for bearing against a braking shoe of the drum brake and to move along the longitudinal axis (X2), **characterised in that** the actuator includes an adjustment element (24) mounted in the nut (12) and cooperating with the nut (12), **in that** the adjustment element (24) is able to be rotatably fixed by the screw in a first direction of travel, during which the screw (16) goes out from the nut, when the screw (16) has travelled at least a given stroke in the first direction of travel (F1), and **in that** the adjustment element (24) forms a longitudinal abutment limiting travel of the screw (24) in the nut (12) in a second direction of travel (F2) opposite to the first direction of travel (F1), when the screw (16) has travelled the given stroke in the second direction of travel (F2).

2. The actuator according to claim 1, wherein the nut (12) includes a body with a longitudinal axis (X2) to be rotatably driven about the longitudinal axis (X2) by the electric motor, said body including a first longitudinal end face (12.1), a second longitudinal end face (12.2) and a bore (14) opening at least into the first longitudinal end face (12.1), said bore (14) including an internal thread, wherein the screw (16) includes a first portion (20) provided with a thread on its first longitudinal end side cooperating with the internal thread, and a second portion (22) on the second longitudinal end side, the first (20) and second (22) portions being connected by a transverse shoulder face (23), wherein the adjustment element (24) is mounted about the second portion (22) of the screw (16), so that the screw (16) can slide relative to the adjustment element (24) over the given stroke, the adjustment element (24) including, at a first longitudinal end, an end face (24.2) facing the shoulder face (23) of the screw (16), the distance separating the end face (24.2) of the adjustment element (24) from the shoulder face (23) being substantially equal to the given stroke, the actuator also including means (26) for rotatably fixing the adjustment element (24) about the longitudinal axis by the screw (16) in the first direction of travel (F1) when the screw (16) has moved by at least the given stroke, the adjustment element (24) being such that when the shoulder face (23) of the screw (16) contacts the end face (24.2) of the adjustment element (24), the travel of the screw (16) in the second direction of travel (F2) is limited.

3. The actuator according to claim 2, wherein the rotatably fixing means (26) include a finger (29) transversally protruding from the second portion (22) and a bearing face (30) carried by a second longitudinal end of the adjustment element (24) opposite to the first longitudinal end, so that, when the screw (16) has travelled at least the given stroke in the first direction of travel (F1), the bearing face (30) contacts the finger (29) rotatably fixing the adjustment element (24) which moves along the longitudinal axis in the first direction of travel (F1) and so that, when the screw (16) moves in the second direction of travel (F2) at least over part of its stroke, the finger (29) moves away from the bearing face (30).

4. The actuator according to claim 3, wherein the bearing surface (30) is in a plane containing the longitudinal axis.

5. The actuator according to one of claims 2, 3 or 4, wherein the thread of the adjustment element (24) includes a material offering a friction coefficient relative to the internal thread of the nut (12) greater than the friction coefficient of the material of the thread of the first portion (20) of the screw relative to the internal thread of the nut (12).

6. The actuator according to claim 5, wherein the adjustment element (24) is of plastic material, Nylon® or rubber.

7. The actuator according to one of claims 1 to 6, wherein the second end face (12.2) of the nut (12) is configured to cooperate with a second braking shoe.

8. An assembly including an actuator according to one of claims 1 to 7 and at least one braking shoe (6) for making a drum brake, wherein the given stroke corresponds to a running clearance of the drum brake.

9. An electric drum brake comprising a backing plate, at least one actuator (10) according to one of claims 1 to 7, at least one brake shoe (6), an electric motor and a drum, the electric motor being to rotatably drive the nut (12) of the actuator (10) both in a service braking phase and in a parking brake application phase.

10. The drum brake including a backing plate (4), at least one hydraulic wheel cylinder (8) for applying at least one brake shoe (6) against a drum in a service braking phase, at least one actuator (10) according to one of claims 1 to 7, at least one brake shoe (6), an electric motor and a drum, the electric motor being for rotatably driving the nut (12) of the actuator (10) to cause the parking brake to be applied.

11. The drum brake according to claim 9 or 10, including means for detecting contact between the screw (16) and the adjustment element (24) upon moving the screw (16) in the second direction of travel (F2).

12. The drum brake according to claim 11, wherein the detection means include means for measuring the current flowing in the electric motor and for detecting an increase in the current above a given threshold.
